# EUROPEAN PATENT APPLICATION

(11) **EP 4 765 448 A1**
(43) Date of publication of application: **24.06.2026**
(21) Application number: 24904061.9
(22) Date of filing: 25.11.2024
(51) Int. Cl.: H01M 50/534, H01M 50/533, H01M 50/536, H01M 10/0585, H01M 50/105

(54) **ELECTRODE ASSEMBLY, BATTERY CELL INCLUDING SAME, AND ELECTRODE LEAD WELDING METHOD**

(30) Priority: 15.12.2023 KR 20230183650; 20.06.2024 KR 20240080414
(71) Applicant: LG Energy Solution, Ltd., Seoul 07335 (KR)
(72) Inventor: MOON, Jae Won, Daejeon 34122 (KR); HONG, Eui Jin, Daejeon 34122 (KR); YU, Hyung Kyun, Daejeon 34122 (KR); YOO, Su Yeon, Daejeon 34122 (KR)
(74) Representative: Goddar, Heinz J.
(86) International application number: PCT/KR2024/018733
(87) International publication number: WO 2025/127496

(57) **Abstract**

The present disclosure relates to an electrode assembly, a battery cell including the same, and an electrode lead welding method, and an electrode assembly according to an embodiment of the present disclosure includes a plurality of electrodes, a plurality of electrode tabs that include a pair of metal layers disposed at the outermost side and a non-metal layer disposed between the pair of metal layers, respectively, and are connected to the plurality of electrodes, through portions formed through the plurality of electrode tabs, an electrode lead coupled to the electrode tab, and an additional metal layer disposed on an outer surface of an outermost electrode tab disposed at the outermost side of the plurality of electrode tabs to cover the through portion.

## Description

### TECHNICAL FIELD

### CROSS-REFERENCE TO RELATED APPLICATIONS

The present application claims priority to Korean Patent Application No. 10-2023-0183650 filed on December 15, 2023 and Korean Patent Application No. 10-2024-0080414 filed on June 20, 2024 in the Republic of Korea, the disclosures of which are incorporated herein by reference.

### TECHNICAL FIELD

The present disclosure relates to an electrode assembly, a battery cell including the same, and an electrode lead welding method.

### BACKGROUND ART

Recently, the depletion of fossil fuels forces to increase the price of energy sources and has strong impact on the growing attention towards environmental pollution, and the need for eco-friendly alternative energy sources is an essential factor for future life. In this context, a variety of energy generation technologies including solar energy, wind energy, tidal energy and the like are being studied, and attention is directed to energy storage systems such as batteries to make use of the produced electrical energy more efficiently.

Moreover, as the technology development and demand for electronic mobile devices and electric vehicles using batteries increase, the demand for batteries as an energy source is rapidly increasing, and accordingly, many studies are being conducted on batteries that meet a variety of needs.

Batteries are gaining attention as an energy source in a wide range of products including mobile devices and electric vehicles. In particular, secondary batteries are regarded as a promising energy resource that can replace the existing products using fossil fuels, and do not produce by-products from the use of energy, so they are attracting attention as an eco-friendly energy source.

Meanwhile, secondary batteries are also attracting attention as an energy source for electric vehicles (EVs), hybrid electric vehicles (REVs), and plug-in hybrid electric vehicles (Plug-In HEVs) that are hailed as a solution for reducing air pollution from the existing vehicles using fossil fuels such as gasoline vehicles and diesel vehicles. That is, secondary batteries are used in the form of a battery pack including a plurality of battery modules.

Secondary batteries include a positive electrode and a negative electrode, and the positive electrode and the negative electrode are stacked with a separator therebetween to form an electrode assembly. At this time, electrode tabs are formed on each of the positive electrode and the negative electrode, and since they are formed on each of a plurality of positive electrodes and a plurality of negative electrodes, a plurality of electrode tabs are also formed. The plurality of electrode tabs are electrically coupled to electrode leads. Conventionally, electrode tabs are made of metal. Recently, electrode tabs have begun to be made of materials other than metal only. A typical example is a metallized film in which a metal is deposited on a non-metal material, specifically a polymer layer.

In the case of a metallized film, when welding by a conventional welding method between electrode tabs and electrode leads, there is a problem of insufficient fusion strength or partial detachment, resulting in the occurrence of defects in the assembly process of secondary batteries. Additionally, when perforating the metallized film using a physical method, there is also a problem that residues are generated due to the stretching properties of the metallized film.

### SUMMARY

### TECHNICAL PROBLEM

The present disclosure is designed to solve the problems of the related art, and therefore the present disclosure is directed to providing an electrode assembly that forms a through portion in an electrode tab formed in a multilayer structure and includes an additional metal layer capable of covering the through portion, thereby securing an electrical connection between the electrode tabs and improving the weldability of the electrode tab and the electrode lead, a battery cell including the same, and an electrode lead welding method.

### TECHNICAL SOLUTION

An electrode assembly according to an embodiment of the present disclosure may include a plurality of electrodes; a plurality of electrode tabs that include a pair of metal layers disposed at the outermost side and a non-metal layer disposed between the pair of metal layers, respectively, and are connected to the plurality of electrodes; through portions formed through the plurality of electrode tabs; an electrode lead coupled to the electrode tab; and an additional metal layer disposed on an outer surface of an outermost electrode tab disposed at the outermost side of the plurality of electrode tabs to cover the through portion.

The electrode lead may be coupled to the outer surface of one outermost electrode tab, and the additional metal layer may be coupled to the outer surface of the other outermost electrode tab.

The electrode lead may be coupled between the plurality of electrode tabs, and the additional metal layer may include a first additional metal layer coupled to the outer surface of one outermost electrode tab; and a second additional metal layer coupled to the outer surface of the other outermost electrode tab.

The additional metal layer may include a metal that is relatively less rigid than the metal layer.

The through portions may be formed in plurality.

The electrode assembly according to another embodiment of the present disclosure may further include a metal member positioned within the through portions.

A portion of the additional metal layer may be introduced into the through portions.

The metal layer may include aluminum, and the non-metal layer may include a polymer.

The additional metal layer may include an inner cover portion covering an inner surface of the through portion; and an outer cover portion connected to the first cover portion and covering the outer surface of the outermost electrode tab.

The inner cover portion may be recessed toward the inside of the through portion.

The inner cover portion may include an electrode tab connection part extending from the outer cover portion to the inside of the through portion and electrically communicating with at least some of the plurality of electrode tabs; and an electrode lead connection part positioned on the bottom surface of the through portion and allowing the electrode tab connection part and the electrode lead to electrically communicate with each other.

A battery cell according to an embodiment of the present disclosure may include an electrode assembly; and a battery case in which the electrode assembly is accommodated, wherein the electrode assembly may include a plurality of electrodes; a plurality of electrode tabs that include a pair of metal layers disposed at the outermost side and a non-metal layer disposed between the pair of metal layers, respectively, and are connected to the plurality of electrodes; through portions formed through the plurality of electrode tabs; an electrode lead coupled to the electrode tab; and an additional metal layer disposed on an outer surface of an outermost electrode tab disposed at the outermost side of the plurality of electrode tabs to cover the through portion.

An electrode lead welding method according to an embodiment of the present disclosure may weld a plurality of electrode tabs and an electrode lead.

The electrode lead welding method may include a step of collecting the plurality of electrode tabs; a step of forming through portions in the plurality of electrode tabs in a direction where the plurality of electrode tabs are stacked; a step of disposing an additional metal layer on an outer surface of one outermost electrode tab; a step of disposing the electrode lead on an outer surface of the other outermost electrode tab; and a step of welding the electrode tab and the electrode lead.

In the step of welding the electrode lead, the additional metal layer may be partially melted and introduced into the through portion.

In the step of disposing the electrode lead, the electrode lead may be disposed so that at least a portion thereof overlaps the through portion in the stacking direction of the electrode tab.

In the step of forming the through portion in the electrode tab, the through portions may be formed by being perforated by a laser.

### ADVANTAGEOUS EFFECTS

An electrode assembly, a battery cell including the same, and an electrode lead welding method according to the present disclosure have the effect of electrically connecting a plurality of electrode tabs by forming a through portion in an electrode tab formed in a multilayer structure. By disposing an additional metal layer on top of the through portion, there is also the effect of preventing problems that may be caused by foreign substances or the like being introduced into the through portion. Additionally, there is the effect of preventing additional residues from being generated by forming the through portion in the electrode tab using a laser.

### BRIEF DESCRIPTION OF THE DRAWINGS

The accompanying drawings illustrate an exemplary embodiment of the present disclosure and together with the following detailed description, serve to provide a further understanding of the technical aspect of the present disclosure, and thus, the present disclosure should not be construed as being limited to the drawings.
FIG. 1 is a perspective view of a battery cell according to the present disclosure.
FIG. 2 is a cross-sectional view taken along line A-A' of FIG. 1 in a battery cell according to an embodiment of the present disclosure.
FIG. 3 is a cross-sectional view of the electrode tab shown in FIG. 2.
FIG. 4 is a schematic view showing that through holes are formed in the electrode tab shown in FIG. 2.
FIG. 5 an enlarged view of part A of FIG. 2.
FIG. 6 is a cross-sectional view taken along line A-A' of FIG. 1 in a battery cell according to another embodiment of the present disclosure.
FIG. 7 an enlarged view of part B of FIG. 6.
FIG. 8 is a schematic view showing that metal members are positioned at through portions in an electrode tab according to another embodiment of the present disclosure.
FIG. 9 is a cross-sectional view taken along line A-A' of FIG. 1 in a battery cell according to still another embodiment of the present disclosure.
FIG. 10 is a flow chart of an electrode lead welding method according to an embodiment of the present disclosure.
FIGS. 11 and 12 are schematic views showing that an additional metal layer is disposed on an outer surface of the outermost electrode tab in an electrode lead welding method according to an embodiment of the present disclosure.
FIG. 13 is a schematic view showing that an electrode tab and an electrode lead are welded by a welding device in an electrode lead welding method according to an embodiment of the present disclosure.

### DETAILED DESCRIPTION

Hereinafter, exemplary embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Electrode assembly and battery cell including the same

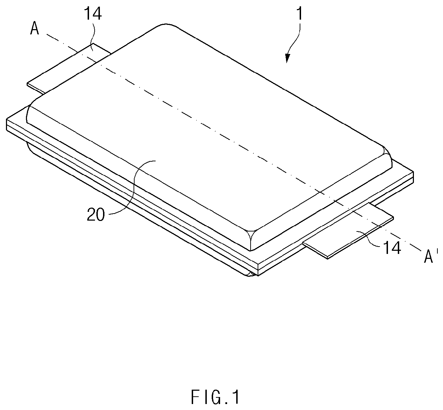

Hereinafter, a battery cell 1 and an electrode lead 14 of the present disclosure will be described in detail with reference to FIGS. 1 to 9.

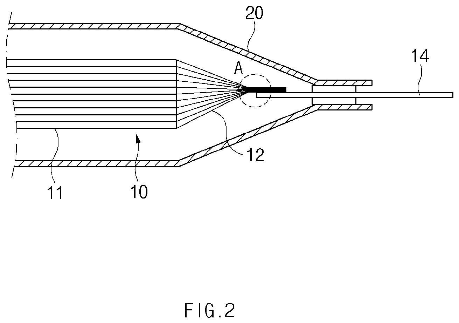

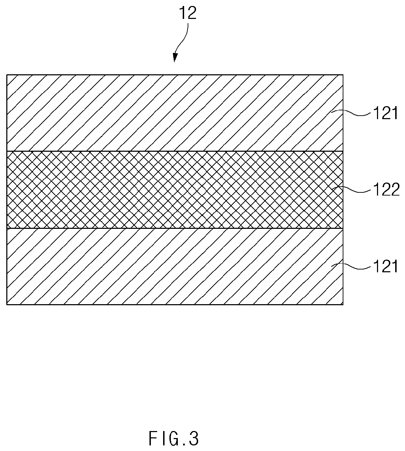

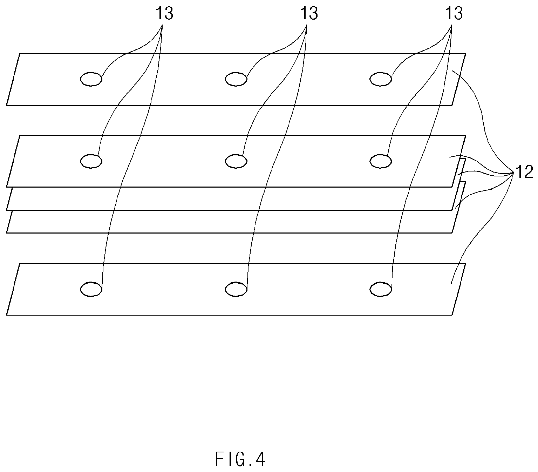

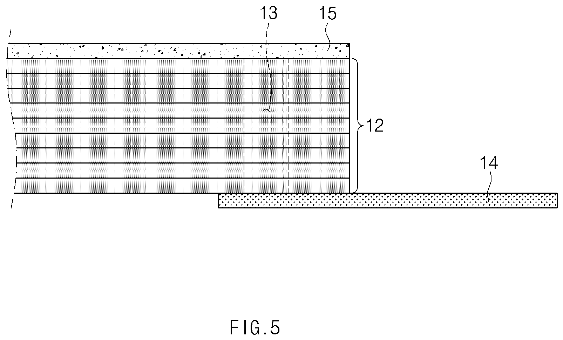

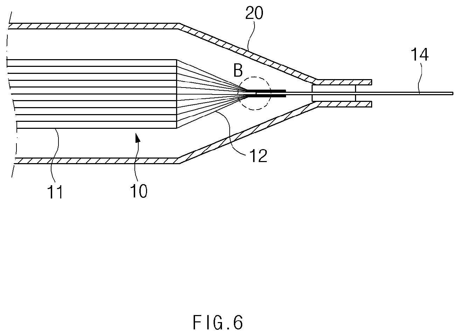

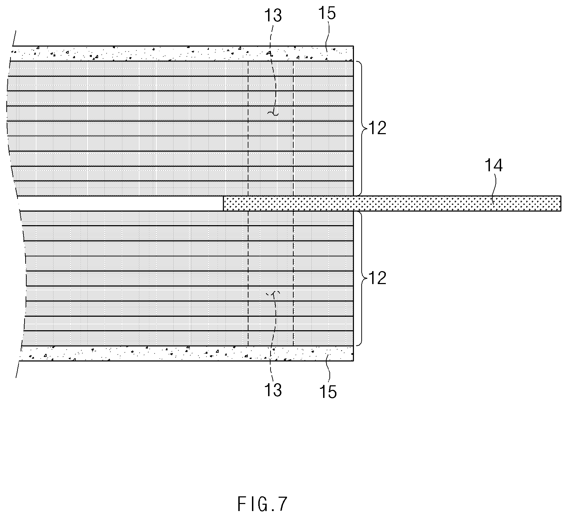

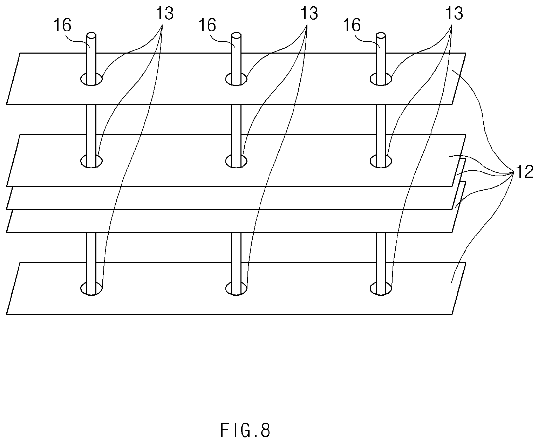

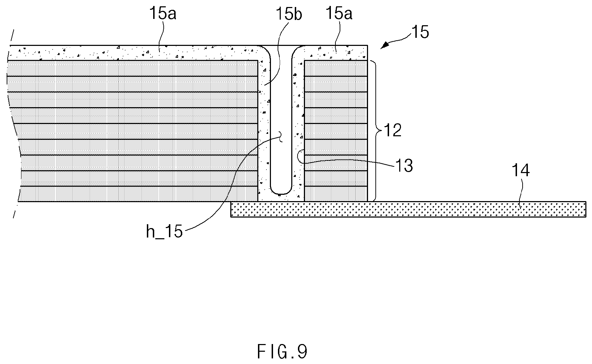

FIG. 1 is a perspective view of a battery cell according to an embodiment of the present disclosure, FIG. 2 is a cross-sectional view taken along line A-A' of the battery cell shown in FIG. 1 according to an embodiment, FIG. 3 is a cross-sectional view of the electrode tab shown in FIG. 2, and FIG. 4 is a schematic view showing that through holes are formed in the electrode tab shown in FIG. 2. FIG. 5 an enlarged view of part A of FIG. 2, FIG. 6 is a cross-sectional view taken along line A-A' of the battery cell shown in FIG. 1 according to another embodiment, FIG. 7 an enlarged view of part B of FIG. 6, and FIG. 8 is a schematic view showing that metal members are positioned at through portions in an electrode tab according to another embodiment of the present disclosure. FIG. 9 is a cross-sectional view taken along line A-A' of FIG. 1 in a battery cell according to still another embodiment of the present disclosure.

Referring to FIG. 2, the battery cell 1 may include an electrode assembly 10 and a battery case 20.

The electrode assembly 10 may include a plurality of electrodes 11, electrode tabs 12, through portions 13, an electrode lead 14, and an additional metal layer 15. The electrode assembly 10 may be formed by stacking the plurality of electrodes 11.

The electrode assembly 10 may be accommodated in the battery case 20. An electrolyte may be accommodated in the battery case 20. In a state where the electrode assembly 10 is accommodated inside the battery case 20 of the battery cell 1, the electrolyte may be injected to permeate the electrode assembly 10. The battery case 20 may be formed of a pouch-type material. The battery case 20 may be formed to be sealed and blocked from the outside. The battery case 20 may be formed through a forming process of a pouch-type material.

The plurality of electrodes 11 may be a positive electrode or a negative electrode. The electrodes 11 may be alternately stacked with a separator in between. The separator may be formed longer than the electrodes 11. As described above, the electrodes 11 may be permeated with the electrolyte, which may allow ions within the electrodes 11 to move through the electrolyte.

The electrode tab 12 may be connected to the plurality of electrodes 11. The electrode tab 12 may be electrically connected to the electrodes 11. The electrode tab 12 may be a positive electrode tab or a negative electrode tab. The positive electrode tab may be connected to the positive electrode, and the negative electrode tab may be connected to the negative electrode. The electrode tab 12 may be formed in plurality as it is connected to each of the plurality of electrodes 11. Through portions 13 may be formed in the electrode tab 12. The electrode tabs 12 may all be formed to be electrically connected.

The electrode tab 12 may include a pair of metal layers 121 and a non-metal layer 122. The electrode tab 12 may be formed by depositing the metal layer 121 on both surfaces of the non-metal layer 122. The thickness of the metal layer 121 may be formed thinner than the thickness of the non-metal layer 122.

The electrode tab 12 may be composed of a metallized film. The metallized film forms a multilayer structure and is formed by depositing the metal layer 121 on the non-metal layer 122, and has the advantage of being lighter than a conventional film using only metal. The non-metal layer 122 may include a polymer. The metal layer 121 may include aluminum or copper. In the case of a positive electrode tab, the metal layer 121 may be aluminum. In the case of a negative electrode tab, the metal layer 121 may be copper.

The through portion 13 may be formed through the electrode tab 12. The through portion 13 may be formed in plurality. The through portions 13 may be formed to completely penetrate the electrode tab 12 in the stacking direction of the electrode tab 12. The through portions 13 may be formed to be spaced apart from the electrode tab 12 at regular intervals. The plurality of through portions 13 may be formed along the width direction of the electrode tab 12. The through portion 13 may be formed in a circular shape, but is not limited thereto.

In the present disclosure, when the electrode tab 12 includes a pair of metal layers 121 and a non-metal layer 122, electrical connection between the metal layers 121 may not be smooth due to the non-metal layer 122, and thus through portions 13 may be formed to maintain electrical connection between the electrode tabs 12.

Referring to FIG. 8, metal members 16 may be positioned within the through portions 13. As described above, the electrode tab 12 includes the non-metal layer 122, so that metal members 16 may be positioned within the through portions 13 to electrically connect a plurality of electrode tabs 12. The outer diameter of the metal member 16 may be less than or equal to the inner diameter of the through portion 13. The metal member 16 may not be a single member but may include metal powder.

The electrode lead 14 may be coupled to the electrode tab 12. The electrode lead 14 may be electrically connected to the electrode tab 12.

An additional metal layer 15 may be disposed to cover the through portion 13. The additional metal layer 15 may be disposed on an outer surface of an outermost electrode tab 12 disposed at the outermost side of the plurality of electrode tabs 12.

The additional metal layer 15 may include the same metal as the metal layer 121. The additional metal layer 15 may have the same chemical properties as the metal layer 121 but different physical properties. The additional metal layer 15 may include a metal having a physical property, rigidity, that is relatively weaker than the metal layer 121. Since the additional metal layer 15 is relatively less rigid, the additional metal layer 15 may be partially melted and introduced into the through portion 13 when welding the electrode lead 14 and the electrode tab 12. A portion of the additional metal layer 15 may be introduced into the through portion 13, thereby maintaining electrical connection between the metal layers 121. The additional metal layer 15 may also have the effect of covering the through portion 13 to prevent problems caused by the introduction of other materials.

Referring to FIGS. 2, 5, and 10 to 12, in the electrode assembly 10 according to an embodiment of the present disclosure, the electrode lead 14 may be coupled to the outer surface of one outermost electrode tab 12. The electrode lead 14 may be coupled to the outer surface of one outermost electrode tab 12, and the additional metal layer 15 may be coupled to the outer surface of the other outermost electrode tab 12. Therefore, the through portion 13 may be formed to communicate from one surface of the additional metal layer 15 to one surface of the electrode lead 14.

Referring to FIGS. 6 and 7, in an electrode assembly 10 according to another embodiment of the present disclosure, the electrode lead 14 may be coupled between a plurality of electrode tabs 12. The additional metal layer 15 may include a first additional metal layer and a second additional metal layer. At this time, since the first additional metal layer and the second additional metal layer have the same configuration except for the arrangement position only, reference numerals of the additional metal layer 15 will be cited.

The first additional metal layer 15 may be coupled to the outer surface of one outermost electrode tab 12. The second additional metal layer 15 may be coupled to the outer surface of the other outermost electrode tab 12. Therefore, the electrode lead 14 may be disposed between the first additional metal layer 15 and the second additional metal layer 15. Therefore, it may be communicated by the through portion 13 from the first additional metal layer 15 to the electrode lead 14, and it may be communicated by the through portion 13 from the electrode lead 14 to second additional metal layer 15.

Hereinafter, electrode tabs 12, an electrode lead 14, and the additional metal layer 15 of the electrode assembly according to still another embodiment of the present disclosure will be described with reference to FIG. 9. In this embodiment, the electrode tab 12 and the electrode lead 14 may be configured in the same manner as the electrode tab and the electrode lead of the electrode assembly described above with respect to FIGS. 2 and 6.

Referring to FIG. 9, the through portion 13 according to this embodiment may be provided in the form of a hole penetrating the plurality of electrode tabs 12. At this time, the hole may penetrate the plurality of electrode tabs 12 from the electrode tab 12 positioned at the outermost side to the innermost electrode tab 12 in contact with the electrode lead 14. The inner circumferential surface of this through portion 13 may be formed of a cross-section of the plurality of electrode tabs 12.

In this embodiment, the additional metal layer 15 may include an outer cover portion 15a and an inner cover portion 15b. The outer cover portion 15a may cover the outer surface of the outermost electrode tab 12. Here, covering the outer surface of the outermost electrode tab 12 may mean including covering one region of the outer surface.

In this embodiment, the inner cover portion 15b may extend from the outer cover portion 15a to the inside of the through portion 13. The inner cover portion 15b may cover the inner surface of the through portion 13. As a result, the plurality of electrode tabs 12 forming the inner circumference of the through portion 13 may electrically communicate with each other.

More specifically, the inner cover portion 15b may include an electrode tab connection part covering the inner circumference of the through portion 13. The electrode tab connection part may have a cylindrical shape similar to the inner circumference of the through portion. However, the shape of the electrode tab connection part may be properly modified to match the shape of the through portion. By means of such an electrode tab connection part, the plurality of electrode tabs 12 may electrically communicate with each other.

In this embodiment, the inner cover portion 15b may include an electrode lead connection part positioned on the bottom surface of the through portion 13. The bottom surface of the through portion 13 may be formed of the outer surface of the electrode lead 14. The electrode lead connection part may be in contact with the outer surface of the electrode lead 14. And, the electrode lead connection part may be connected to the electrode tab connection part.

In this embodiment, the electrode lead connection part may allow the electrode lead 14 and the electrode tab connection part to electrically communicate with each other. Through this, the electrode lead 14 and the electrode tab 12 may be electrically connected to each other via the inner cover portion 15b.

Meanwhile, in this embodiment, the inner cover portion 15b may be formed by a portion of the additional metal layer 15 covering the outermost electrode tab 12 being recessed toward the inside of the through portion 13. As an example, the inner cover portion 15b may be formed by a portion of the additional metal layer 15 being pressed into the through portion 13 by an external force. As another example, the inner cover portion 15b may be formed by a portion of the additional metal layer 15 being melted and introduced into the through portion 13.

As a result, a groove h_15 concavely recessed from the additional metal layer 15 toward the electrode lead 14 may be formed at the center of the inner cover portion 15b. Of course, in some cases, as the inner cover portion 15b fills the through portion 13 entirely, no separate groove may be formed in the inner cover portion 15b.

As described above, according to another embodiment of the present disclosure, since the inner cover portion 15b of the additional metal layer 15 allows the electrode lead 14 and the electrode tab 12 to electrically communicate with each other, the electrical connectivity of this electrode assembly may be more stable and reliable.

### Electrode lead welding method

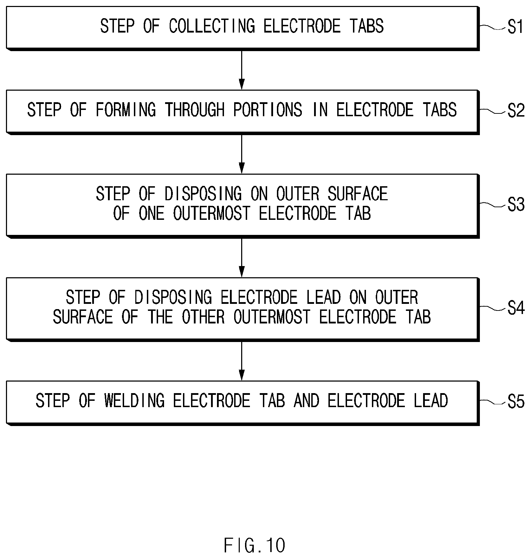

Hereinafter, an electrode lead welding method according to an embodiment of the present disclosure will be described in detail with reference to FIGS. 10 to 13.

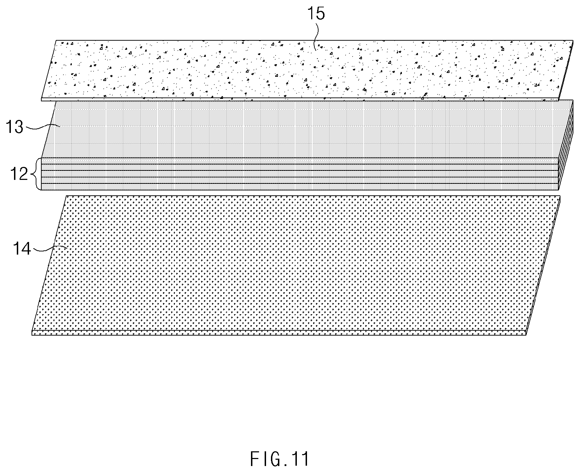

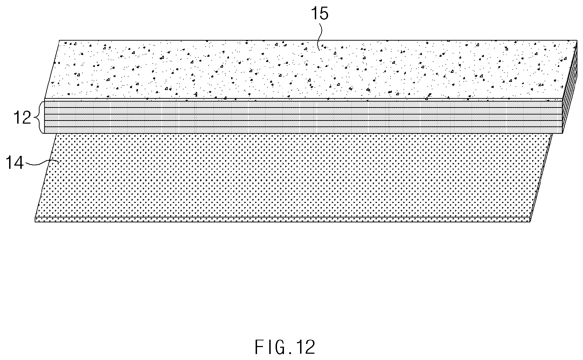

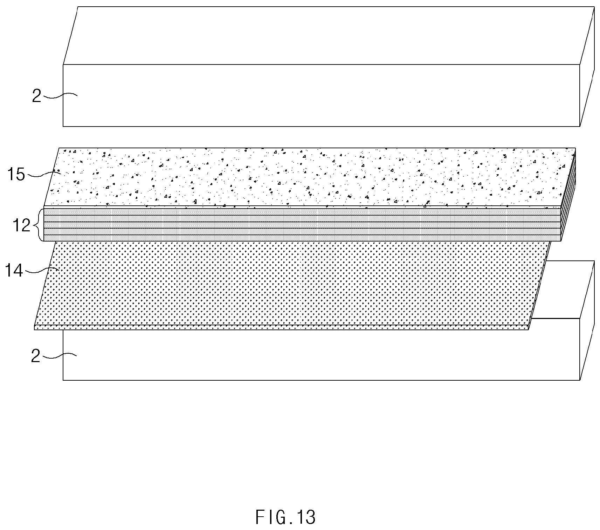

FIG. 10 is a flow chart of an electrode lead welding method according to an embodiment of the present disclosure, FIGS. 11 and 12 are schematic views showing that an additional metal layer is disposed on an outer surface of the outermost electrode tab in an electrode lead welding method according to an embodiment of the present disclosure, and FIG. 13 is a schematic view showing that an electrode tab and an electrode lead are welded by a welding device in an electrode lead welding method according to an embodiment of the present disclosure.

Referring to FIGS. 10 to 13, an electrode lead welding method according to an embodiment of the present disclosure may weld a plurality of electrode tabs 12 and an electrode lead 14. The electrode lead welding method may include a step S1 of collecting the plurality of electrode tabs 12.

In the step S1 of collecting the plurality of electrode tabs 12, the plurality of electrode tabs 12 may be collected at the center of a direction in which the electrode tabs 12 are stacked. In the step S1 of collecting the electrode tabs 12, the positive electrode tabs may be collected with the positive electrode tabs and the negative electrode tabs may be collected with the negative electrode tabs.

The electrode lead welding method may include a step S2 of forming through portions 13 in the plurality of electrode tabs 12. In the step S2 of forming the through portions in the electrode tabs, the through portions 13 may be formed by being perforated by a laser. When forming the through portions 13 in the electrode tabs 12, all the through portions 13 should be formed to be aligned when the plurality of electrode tabs 12 are viewed from the stacking direction of the electrode tabs 12.

When forming the through portions 13, the through portions 13 may be formed in a circular shape using a laser. If the through portions 13 are perforated using physical force, residues may be generated due to the stretching properties of the electrode tab 12, and it may be difficult to form the through portions 13 in a regular pattern. Therefore, the through portions 13 are perforated using a laser in order to form the through portions 13 in a regular pattern and remove the residues. Additionally, as described above, the electrode tab 12 may be composed of a metalized film, and the metalized film has the characteristic of being easily perforated by a laser. The through portions 13 may be formed using a laser by utilizing this characteristic.

The electrode lead welding method may include a step S3 of disposing an additional metal layer 15 on an outer surface of one outermost electrode tab 12. The additional metal layer 15 may be disposed to cover the through portions 13 of the electrode tabs 12 entirely.

The electrode lead welding method may include a step S4 of disposing the electrode lead 14 on an outer surface of the other outermost electrode tab 12. In the step S4 of disposing the electrode lead 14, the electrode lead 14 may be disposed so that at least a portion thereof overlaps the through portion 13 in the stacking direction of the electrode tab 12. The electrode lead 14 may be electrically connected to the electrode tab 12 by at least a portion thereof overlapping the through portion 13.

The electrode lead welding method may include a step S5 of welding the electrode tab 12 and the electrode lead 14. The electrode tab 12 and the electrode lead 14 may be welded using a welding device 2 in the stacking direction of the electrode tab 12 and the electrode lead 14. The electrode tab 12 and the electrode lead 14 may be welded using ultrasonic waves in the welding device 2.

In the step S5 of welding the electrode lead, the additional metal layer 15 is partially melted and introduced into the through portion 13. Since the additional metal layer 15 is partially melted and introduced into the through portion 13, it may be electrically connected between the plurality of electrode tabs 12.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Battery cell
10: Electrode assembly
11: Electrode
12: Electrode tab
121: Metal layer
122: Non-metal layer
13: Through portion
14: Electrode lead
15: Additional metal layer
20: Battery case

## Claims

1. An electrode assembly comprising:
a plurality of electrodes;
a plurality of electrode tabs that comprise a pair of metal layers disposed at the outermost side and a non-metal layer disposed between the pair of metal layers, respectively, and are connected to the plurality of electrodes;
through portions formed through the plurality of electrode tabs;
an electrode lead coupled to the electrode tab; and
an additional metal layer disposed on an outer surface of an outermost electrode tab disposed at the outermost side of the plurality of electrode tabs to cover the through portion.

2. The electrode assembly according to claim 1,
wherein the electrode lead is coupled to the outer surface of one outermost electrode tab, and
the additional metal layer is coupled to the outer surface of the other outermost electrode tab.

3. The electrode assembly according to claim 1,
wherein the electrode lead is coupled between the plurality of electrode tabs, and
the additional metal layer comprises:
a first additional metal layer coupled to the outer surface of one outermost electrode tab; and
a second additional metal layer coupled to the outer surface of the other outermost electrode tab.

4. The electrode assembly according to claim 1,
wherein the additional metal layer comprises a metal that is relatively less rigid than the metal layer.

5. The electrode assembly according to claim 1, further comprising:
a metal member positioned within the through portions.

6. The electrode assembly according to claim 1,
wherein the through portions are formed in plurality.

7. The electrode assembly according to claim 1,
wherein a portion of the additional metal layer is introduced into the through portions.

8. The electrode assembly according to claim 1,
wherein the metal layer comprises aluminum, and
the non-metal layer comprises a polymer.

9. The electrode assembly according to claim 1,
wherein the additional metal layer comprises:
an inner cover portion covering an inner surface of the through portion; and
an outer cover portion connected to the first cover portion and covering the outer surface of the outermost electrode tab.

10. The electrode assembly according to claim 9,
wherein the inner cover portion is recessed toward the inside of the through portion.

11. The electrode assembly according to claim 9,
wherein the inner cover portion comprises:
an electrode tab connection part extending from the outer cover portion to the inside of the through portion and electrically communicating with at least some of the plurality of electrode tabs; and
an electrode lead connection part positioned on the bottom surface of the through portion and allowing the electrode tab connection part and the electrode lead to electrically communicate with each other.

12. A battery cell comprising:
an electrode assembly; and
a battery case in which the electrode assembly is accommodated,
wherein the electrode assembly comprises:
a plurality of electrodes;
a plurality of electrode tabs that comprise a pair of metal layers disposed at the outermost side and a non-metal layer disposed between the pair of metal layers, respectively, and are connected to the plurality of electrodes;
through portions formed through the plurality of electrode tabs;
an electrode lead coupled to the electrode tab; and
an additional metal layer disposed on an outer surface of an outermost electrode tab disposed at the outermost side of the plurality of electrode tabs to cover the through portion.

13. An electrode lead welding method for welding a plurality of electrode tabs and an electrode lead, the electrode lead welding method comprising:
a step of collecting the plurality of electrode tabs;
a step of forming through portions in the plurality of electrode tabs in a direction where the plurality of electrode tabs are stacked;
a step of disposing an additional metal layer on an outer surface of one outermost electrode tab;
a step of disposing the electrode lead on an outer surface of the other outermost electrode tab; and
a step of welding the electrode tab and the electrode lead.

14. The electrode lead welding method according to claim 13,
wherein in the step of welding the electrode lead,
the additional metal layer is partially melted and introduced into the through portion.

15. The electrode lead welding method according to claim 13,
wherein in the step of disposing the electrode lead,
the electrode lead is disposed so that at least a portion thereof overlaps the through portion in the stacking direction of the electrode tab.

16. The electrode lead welding method according to claim 13,
wherein in the step of forming the through portion in the electrode tab,
the through portions are formed by being perforated by a laser.
